# EUROPEAN PATENT SPECIFICATION

(11) **EP 0 504 248 B1**
(45) Date of publication and mention of the grant of the patent: **08.05.1996**
(21) Application number: 91900899.5
(22) Date of filing: 07.12.1990
(51) Int. Cl.: H04J 11/00, H04J 14/02

(54) **OPTICAL FIBRE COMMUNICATIONS SYSTEM**
LICHTWELLENLEITERKOMMUNIKATIONSSYSTEM
SYSTEME DE COMMUNICATIONS PAR FIBRE OPTIQUE

(30) Priority: 08.12.1989 GB 8927783
(43) Date of publication of application: 23.09.1992
(73) Proprietor: BRITISH TELECOMMUNICATIONS public limited company, London EC1A 7AJ (GB)
(72) Inventor: COOPER, Anthony, James, Ipswich Suffolk IP3 0NQ (GB); FENNING, Simon, Charles, Ipswich Suffolk IP2 8EU (GB); REEVE, Michael, Harry, Ipswich Suffolk IP5 7ED (GB); BICKERS, Lawrence, Ipswich Suffolk IP10 0DT (GB); ROSHER, Paul, Adrian, Ipswich Suffolk IP8 3SE (GB)
(74) Representative: Roberts, Simon Christopher
(86) International application number: GB9001916
(87) International publication number: WO9109478

(56) References cited:
- Proceedings, the Internation Symposium on Subscriber Loops and Services, Boston, US, 11-16 September 1988, IEEE, Plc., (New York, US), N. Kanno et al.: "Fiber optic digital video signals transport for broadband subscriber network", pages 222-229
- Technical Digest, 13th European Conference on Optical Communication, volume 3, 13-17 September, (Helsinki, SF), C. Baack et al.: "Coherent Multicarrier techniques in future broadband communications networks", pages 78-87
- Technical Digest, 13 th European Conference on Optical Communication, volume 1, 13-17 September 1987, (Helsinki, SF), Ch. Caspar et al.: "Automatic switching system in optical hetrodyne technique", pages 317-320
- Journal of Lightwave Technology, volume 7, no. 6, June 1989, IEEE, Plc., (New York, US) T.E. Darcie et al.: "Wide-band lightwave distribution system using subcarrier multiplexing", pages 997-1005
- Electronics Letters, volume 21, no. 25, 5 December 1985, (Stevenage, GB), E.J. Bachus et al.: "Coherent optical-fibre subscriber line", pages 1203-1205

## Description

This invention relates to an optical fibre communications system, and to a method of controlling the provision of services on such a system.

In optical transmission systems, the radiation used is not necessarily in the visible region of the electromagnetic spectrum, and so the words 'optical' and 'light' when used in this specification are not to be interpreted as implying any limitation to the visible spectrum. For example, the wavelengths preferred for transmission through silica optical fibres are in the infra red region, because the loss minima of silica fibres occurs at 1.3 and 1.5 microns.

Optical transmission systems may be utilised to distribute various services such as telephony, video channels, facsimile and data transmission. In general, the primary service, at least as presently measured in terms of subscriber lines, is telephony. Various techniques are available for separating lines from one another, and also for separation of different services, for example the transmitted signals may be time, wavelength or subcarrier frequency multiplexed.

A disadvantage of time division multiplexing is that it requires a very wide bandwidth. Moreover, expensive receivers and transmitters are required, together with a complex protocol for providing customers with a range of services. Therefore, it is not an attractive financial proposition for situations where, for example, only a telephony line is initially required and there is only a limited likelihood of additional services being required subsequently. Likewise, wavelength division multiplexing, with different services on different wavelengths, would also require additional optical transmitters and receivers to be installed for an expansion of services on additional channels.

There has been much recent interest in subcarrier frequency multiplexing for optical transmission systems, and in particular in subcarrier frequency multiplexing utilising microwave subcarrier frequencies. With such an arrangement, the electronics operating at the microwave subcarrier frequency are now of a proven reliability and low cost; and, with multiplexing possible, it has been proposed to utilise subcarrier multiplexing with the subscriber receiver tuned to a particular subcarrier frequency.

The basic starting point for a transmission network is usually the provision of a telephony link. Initially, supply of additional services over the link may not be required, even though optical fibre has a sufficiently larger bandwidth to provide more services. The invention relates to a flexible system which can expand services as demand arises, without the need for installation of additional transmitter and receiver equipment.

The papers "Fiber Optic Digital Video Signals Transport For Broadband Subscriber Network" - Proceedings, the International Symposium on Subscriber Loops and Services, Boston, US, 11-16 September 1991, IEEE, pages 222-229, and "Coherent Multicarrier Techniques in Future Broadband Communications Networks" - Technical Digest, 13th European Conference on Optical Communication, Volume 3, 13-17 September 1987, pages 78-87 disclose known communications systems.

The present invention provides an optical fibre communications system in which a plurality of optical fibre subscriber lines are connected to exchange apparatus capable of providing different subcarrier frequencies, each of the optical fibre subscriber lines being provided with a respective terminal apparatus operable at a plurality of said different subcarrier frequencies, and the exchange apparatus being provided with downlink control means for governing access of each individual terminal apparatus to given subcarrier frequencies, for selectively allocating services to each individual terminal apparatus, characterised in that the downlink control means transmits control signals to each individual terminal apparatus on a separate common control channel.

Preferably, the common control channel is constituted by a predetermined one of the subcarrier frequencies.

Advantageously, the common control channel means is such that access of a given terminal apparatus to a given subcarrier frequency is governed by selectively enabling that terminal apparatus to operate on the given subcarrier frequency.

The control means may also be such that a predetermined subcarrier frequency is enabled for a restricted time period. Preferably, each terminal apparatus is provided with means for requesting the exchange apparatus for service frequency allocation.

The invention also provides a method of controlling the provision of services in an optical fibre communications network constituted by exchange apparatus and a plurality of optical fibre subscriber lines, the method comprising the steps of providing a range of services on different subcarrier frequencies, providing each of the subscriber lines with a respective terminal apparatus operable at a plurality of said different subcarrier frequencies, and tuning each terminal apparatus to govern access to said different subcarrier frequencies, for selectively allocating services to each terminal apparatus, by control signals from the exchange apparatus, characterised in that the control signals are transmitted to each terminal apparatus on a separate common control channel.

The invention will now be described in greater detail, by way of example, with reference to the accompanying drawings, in which:
Figure 1 is a frequency diagram schematically illustrating the subcarrier frequency multiplexing scheme used in the system of Figure 2;
Figure 2 is a schematic diagram of an optical fibre communications system constructed in accordance with the invention;
Figure 3 is a flow diagram of a customer-initiated service request; and
Figure 4 is a flow diagram of an exchange-initiated service provision.

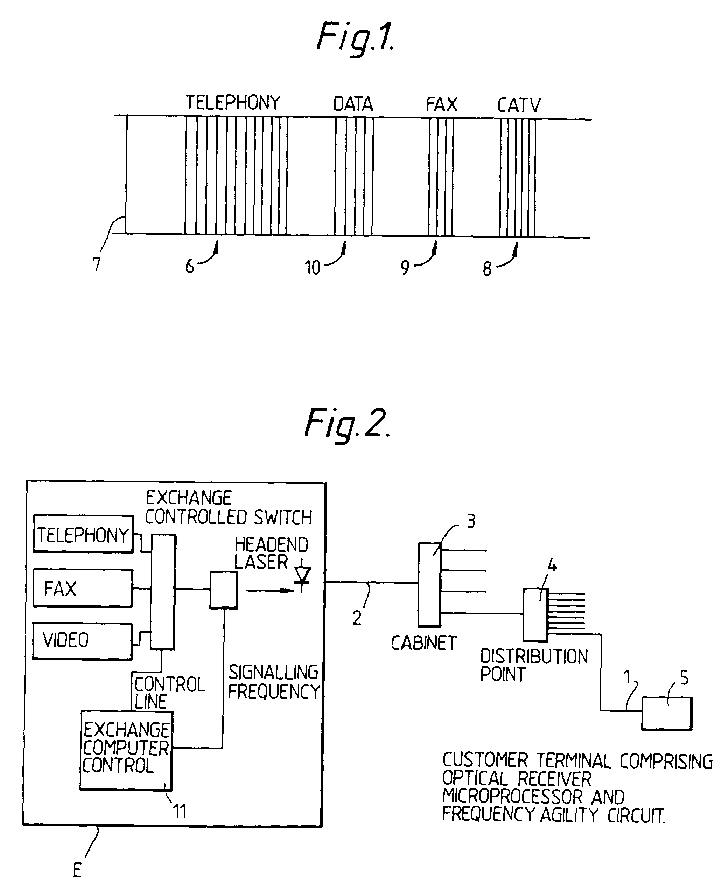

Referring to the drawings, Figure 1 shows a schematic subcarrier frequency diagram at a particular optical operating frequency in the 1300nm or 1500nm transmission windows of silica fibre. It will be realised that a similar subcarrier multiplexing scheme can operate at other optical frequencies, thereby providing an enormous range of available channels. Initially, the service provided will be telephony, for example on a passive optical network (PON) such as that illustrated in Figure 2, in which 32 telephony subscriber lines 1 are provided from an exchange E. A single fibre 2 leaves the exchange E, and is split four ways at a cabinet 3, and eight ways at each of four distribution points 4 (only one of which is shown in Figure 2). Each of the 32 lines 1 terminates at a respective subscriber apparatus (transmitter /receiver) 5 which is tuned to a particular one of the subscriber telephony subcarrier frequencies 6, and also receives control signals on a common control frequency 7. The control signals address the subscriber apparatus 5, and tunes them to receive only their allocated subscriber frequencies. Return information, from the subscriber end to the exchange E (for example by automatic repeat request signalling), may also be given on a common control frequency, for example to indicate faults or tampering. At the same time, or subsequently, additional services such as video channels (CATV), high definition facsimile lines and data channels referenced respectively 8, 9 and 10, are provided from the exchange E on to the PON at their own unique subcarrier frequencies.

Requests for additional services can be made from any of the subscribers to the exchange E. Within the exchange E, the requests for service allocation are microprocessor controlled, so that the subscriber simply dials a request code, the microprocessor checks for service availability (for example whether there is a high definition facsimile line available), makes a service frequency allocation, and sends out the frequency enabling control signal addressed to the subscriber.

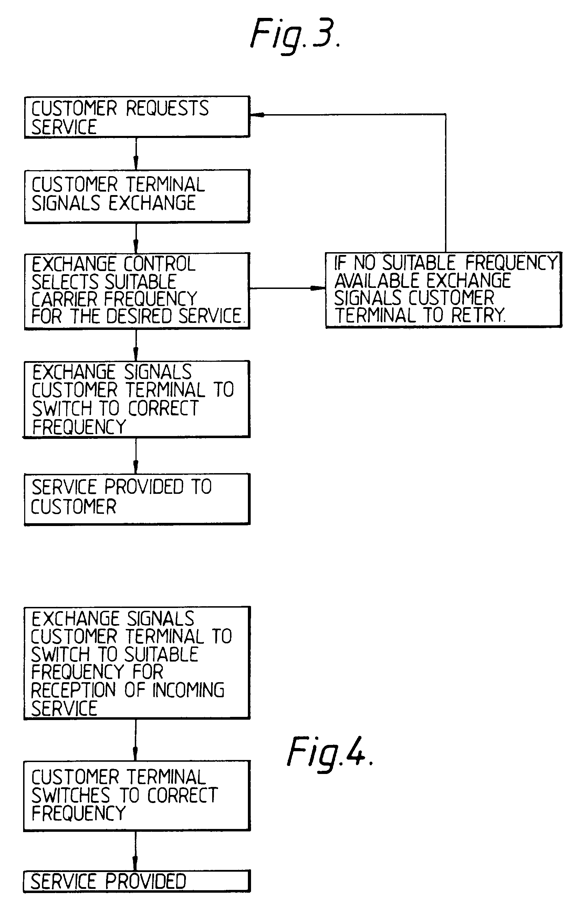

Figure 3 illustrates an additional service request procedure. When a subscriber wishes to receive an additional service, he or she makes a request for the service to the exchange E, the subscriber apparatus 5 signalling to the exchange. This signalling may be on the control frequency 7, or another control frequency. At the exchange E, a computer control 11 (see Figure 2) determines whether the requested service is one that is on a frequency that can be made generally available, such as reception of CATV, or whether the serice requires a unique frequency such as a high definition facsimile service. Having estabished the type of service required, the computer control 11 allocates a carrier frequency, and a control signal is sent out on the control frequency that enables the subscriber apparatus 5 to access the frequency of the requested service. In some instances, when unique frequencies are required, there may not be a suitable frequency available, in which case the exchange E sends control signals to the subscriber apparatus 5 to retry.

Tuning to a new subcarrier frequency may also be initiated by the exchange E, for example to enable receipt of an incoming high definition facsimile service. The sequence is then as shown in Figure 4, the exchange E signalling to the subscriber apparatus 5 on the control frequency to tune to the correct frequency for the incoming service.

Access to a given frequency may be provided on a long term enabling basis, for a predetermined interval, or for the duration of a subsequent use. For example, for access to some or all of the video channels, it is envisaged that general access on a permanent basis would be preferred. However, for data transmission or high definition facsimile, it is envisgaed that lines may be leased on a time basis, thereby enabling maximum usage of the channels and removing the need to provide a unique channel for each potential user.

In order that second order subcarrier intermodulation products do not interfere with the services provided, the services may all be provided within a single octave, so that the second intermodulation products fall out of band. Alternatively, the frequencies used for the services may be selected so that they interleave with the intermodulation products.

## Claims

1. An optical fibre communications system in which a plurality of optical fibre subscriber lines (1) are connected to exchange apparatus (E) capable of providing different subcarrier frequencies (6-10), each of the optical fibre subscriber lines being provided with a respective terminal apparatus (5) operable at a plurality of said different subcarrier frequencies, and the exchange apparatus being provided with downlink control means (11) for governing access of each individual terminal apparatus to given subcarrier frequencies, for selectively allocating services to each individual terminal apparatus, characterised in that the downlink control means transmits control signals to each individual terminal apparatus on a separate common control channel.

2. A system as claimed in claim 1, wherein the control means is such that access of a given terminal apparatus to a given subcarrier frequency is governed by selectively enabling that terminal apparatus to operate on the given subcarrier frequency.

3. A system as claimed in claim 1 or claim 2, wherein the control means is such that a predetermined subcarrier frequency is enabled for a restricted time period.

4. A system as claimed in any one claims 1 to 3, wherein each terminal apparatus is provided with means for requesting the exchange apparatus for service frequency allocation.

5. A system as claimed in any one of claims 1 to 4, wherein the common control channel is constituted by a predetermined one of the subcarrier frequencies.

6. A system as claimed in any one of claims 1 to 5, wherein the subcarrier frequencies fall within a single octave.

7. A method of controlling the provision of services in an optical fibre communications network constituted by exchange apparatus and a plurality of optical fibre subscriber lines, the method comprising the steps of providing a range of services on different subcarrier frequencies, providing each of the subscriber lines with a respective terminal apparatus operable at a plurality of said different subcarrier frequencies, and tuning each terminal apparatus to govern access to said different subcarrier frequencies, for selectively allocating services to each terminal apparatus, by control signals from the exchange apparatus, characterised in that the control signals are transmitted to each terminal apparatus on a separate common control channel.

8. A method as claimed in claim 7, wherein service request signals are made from the terminal apparatus to the exchange apparatus.

9. A method as claimed in claim 7 or claim 8, wherein terminal apparatus access to a particular subcarrier frequency is enabled for a restricted time period.

10. A method as claimed in claim 7 or claim 8, wherein terminal apparatus access to a particular subcarrier frequency is enabled on an unrestricted time basis.

11. A method as claimed in any one of claims 7 to 10, wherein the subcarrier frequencies fall within a single octave.

## Patentansprüche

1. Optisches Faserkommunikationssystem, bei dem mehrere Anwenderleitungen (1) aus optischen Fasern mit einer Vermittlungsvorrichtung (E) verbunden sind, die mehrere Unterträgerfrequenzen (6 bis 10) bereitstellen kann, wobei jede Anwenderleitung aus optischen Fasern mit einer jeweiligen Anschlußvorrichtung (5) versehen ist, die auf mehreren der verschiedenen Unterträgerfrequenzen betrieben werden kann, und wobei die Vermittlungsvorrichtung mit einer Abwärtsverbindungs-Steuerungseinrichtung (11) versehen ist, um den Zugriff einer jeden einzelnen Anschlußvorrichtung auf bestimmte Unterträgerfrequenzen zu kontrollieren, um Dienste wahlfrei den individuellen Anschlußvorrichtungen zuzuordnen, dadurch gekennzeichnet, daß die Abwärtsverbindungs-Steuerungseinrichtung an jede einzelne Anschlußvorrichtung Steuerungssignale auf einem getrennten, gemeinsamen Steuerungskanal sendet.

2. System nach Anspruch 1, bei dem die gemeinsame Steuerungseinrichtung so beschaffen ist, daß der Zugriff einer bestimmten Anschlußvorrichtung auf eine bestimmte Unterträgerfrequenz dadurch kontrolliert wird, daß es dieser Anschlußvorrichtung wahlfrei ermöglicht wird, auf der bestimmten Unterträgerfrequenz zu arbeiten.

3. System nach Anspruch 1 oder 2, bei dem die Steuerungseinrichtung so ausgelegt ist, daß eine bestimmte Unterträgerfrequenz für einen begrenten Zeitraum zugelassen wird.

4. System nach einem der Ansprüche 1 bis 3, bei dem jede Anschlußvorrichtung mit einer Einrichtung zum Auffordern der Vermittlungsvorrichtung zur Zuteilung einer Dienstfrequenz versehen ist.

5. System nach einem der Ansprüche 1 bis 4, bei dem der gemeinsame Steuerungskanal durch eine vorbestimmte Unterträgerfrequenz gebildet wird.

6. System nach einem der Ansprüche 1 bis 5, bei dem die Unterträgerfrequenzen in einer einzigen Oktave liegen.

7. Verfahren zur Steuerung der Zuteilung von Diensten in einem Kommunikationsnetzwerk mit optischen Fasern, das aus einer Vermittlungsvorrichtung und mehreren Benutzerleitungen aus optischen Fasern besteht, wobei das Verfahren folgende Schritte aufweist: Anbieten mehrerer Dienste auf unterschiedlichen Unterträgerfrequenzen, Versehen jeder Anwenderleitung mit einer jeweiligen Anschlußvorrichtung, die auf mehreren der unterschiedlichen Unterträgerfrequenzen arbeiten kann, und Abstimmen jeder Anschlußvorrichtung, um den Zugang zu den unterschiedlichen Unterträgerfrequenzen zu kontrollieren, um Dienste wahlfrei jeder Anschlußvorrichtung zuzuordnen, mittels Steuerungssignalen von der Vermittlungsvorrichtung, dadurch gekennzeichnet, daß die Steuerungssignale jeder Anschlußvorrichtung über einen getrennten, gemeinsamen Steuerungskanal zugesandt werden.

8. Verfahren nach Anspruch 7, bei dem von der Anschlußvorrichtung Dienstanforderungssignale an die Vermittlungsvorrichtung gesandt werden.

9. Verfahren nach Anspruch 7 oder 8, bei dem der Zugriff einer Anschlußvorrichtung auf eine bestimmte Unterträgerfrequenz zeitlich begrenzt ist.

10. Verfahren nach Anspruch 7 oder 8, bei dem der Zugriff einer Anschlußvorrichtung auf eine bestimmte Unterträgerfrequenz zeitlich unbegrenzt ist.

11. Verfahren nach einem der Ansprüche 7 bis 10, bei dem die Unterträgerfrequenzen in einer Oktave liegen.

## Revendications

1. Système de communications à fibre optique dans lequel une pluralité de lignes d'abonnés à fibre optique (1) sont reliées à un dispositif de central (E) capable de procurer différentes fréquences de sous-porteuses (6 à 10), chacune des lignes d'abonnés à fibre optique étant munie d'un dispositif terminal respectif (5) pouvant être mis en oeuvre à une pluralité desdites fréquences de sous-porteuses différentes, et le dispositif de central étant muni d'un moyen de commande de liaison descendante (11) afin de régir l'accès de chaque dispositif terminal individuel aux fréquences de sous-porteuses données, pour allouer de façon sélective des services à chaque dispositif terminal individuel, caractérisé en ce que le moyen de commande de liaison descendante transmet des signaux de commande à chaque dispositif terminal individuel sur un canal de commande commun séparé.

2. Système selon la revendication 1, dans lequel le moyen de commande est tel que l'accès d'un dispositif terminal donné à une fréquence de sous-porteuse donnée est régi en validant de façon sélective ce dispositif terminal pour qu'il fonctionne sur la fréquence de sous-porteuse donnée.

3. Système selon la revendication 1 ou la revendication 2, dans lequel le moyen de commande est tel qu'une fréquence de sous-porteuse prédéterminée est validée pendant un intervalle de temps restreint.

4. Système selon l'une quelconque des revendications 1 à 3, dans lequel chaque dispositif terminal est muni de moyens destinés à demander au dispositif de central l'allocation d'une fréquence de service.

5. Système selon l'une quelconque des revendications 1 à 4, dans lequel le canal de commande commun est constitué d'une fréquence prédéterminée parmi les fréquences de sous-porteuses.

6. Système selon l'une quelconque des revendications 1 à 5, dans lequel les fréquences de sous-porteuses tombent à l'intérieur d'un octave unique.

7. Procédé de commande de la fourniture de services dans un réseau de communication à fibre optique constitué d'un dispositif de central et d'une pluralité de lignes d'abonnés à fibre optique, le procédé comprenant les étapes consistant à procurer une gamme de services sur des fréquences de sous-porteuses différentes, en munissant chacune des lignes d'abonnés d'un dispositif terminal respectif pouvant être mis en oeuvre à une pluralité desdites fréquences de sous-porteuses différentes, et à accorder chaque dispositif terminal pour régir l'accès auxdites fréquences de sous-porteuses différentes, afin d'allouer de façon sélective des services à chaque dispositif terminal, par des signaux de commande provenant du dispositif de central, caractérisé en ce que les signaux de commande sont transmis à chaque dispositif terminal sur un canal de commande commun séparé.

8. Procédé selon la revendication 7, dans lequel les signaux de demande de service sont établis à partir du dispositif terminal vers le dispositif de central.

9. Procédé selon la revendication 7 ou la revendication 8, dans lequel l'accès du dispositif terminal à une fréquence de sous-porteuse particulière est validé pendant un intervalle de temps restreint.

10. Procédé selon la revendication 7 ou la revendication 8, dans lequel l'accès du dispositif terminal à une fréquence de sous-porteuse particulière est validé sur un principe de non restriction dans le temps.

11. Procédé selon l'une quelconque des revendications 7 à 10, dans lequel les fréquences de sous-porteuses tombent à l'intérieur d'un octave unique.
